Europäisches Patentamt

(19) **European Patent Office**

**Office européen des brevets**

(11) Numéro de publication: **0 250 323**
**B1**

(12) **FASCICULE DE BREVET EUROPEEN**

(45) Date de publication du fascicule du brevet:
**27.09.89**

(51) Int. Cl.⁴: **F01D 5/08**
// F02C7/18

(21) Numéro de dépôt: **87401369.1**

(22) Date de dépôt: **18.06.87**

(54) Dispositif de contrôle des débits d'air de refroidissement d'une turbine de moteur.

(30) Priorité: **18.06.86 FR 8608776**

(43) Date de publication de la demande:
**23.12.87 Bulletin 87/52**

(45) Mention de la délivrance du brevet:
**27.09.89 Bulletin 89/39**

(84) Etats contractants désignés:
**DE FR GB**

(56) Documents cités:
**EP-A- 0 144 842**
**CH-A- 311 370**
**FR-A- 2 214 044**
**GB-A- 2 111 598**
**GB-A- 2 137 283**
**GB-A- 2 151 715**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris(FR)**

(72) Inventeur: **Kervistin, Robert, 215, rue Aristide Briand, F-77350 Le Mee sur Seine(FR)**

(74) Mandataire: **Moinat, François, S.N.E.C.M.A. Service des Brevets Boîte Postale 81, F-91003 Evry Cédex(FR)**

## Description

L'invention concerne un dispositif de contrôle des débits d'air de refroidissement d'une turbine de moteur et plus particulièrement de l'air de refroidissement circulant dans les fonds des alvéoles, logeant les pieds d'aube, prévus dans les disques d'un rotor de turbine.

Les turbines d'un moteur d'avion comprennent généralement plusieurs étages d'aubage dont certains comportent des alvéoles de pieds d'aube susceptibles d'être refroidis par un flux d'air prélevé au compresseur. Afin de réduire le débit d'air prélevé au compresseur, le refroidissement est fait en cascade. Ainsi, seul le premier étage est refroidi par l'air provenant directement du compresseur, les étages suivants étant refroidis par l'air ayant déjà circulé dans le ou les étages précédents.

Le débit d'air prélevé est prévu pour assurer le refroidissement dans les conditions de fonctionnement les plus sévères à savoir le décollage. En effet dans ce cas, on se trouve en présence du régime moteur le plus élevé et des gradients thermiques les plus forts.

Au cours des autres phases du vol : croisière, ralenti, approche, certains étages peuvent se passer de refroidissement. Aussi a-t-on cherché à obtenir un contrôle automatique des flux d'air de refroidissement en utilisant les variations dimensionnelles de certains éléments de la turbine soumis aux variations de température du flux de gaz traversant les aubages.

On connait par exemple du brevet FR-A 2 280 791 un dispositif de contrôle du jeu entre un anneau d'étanchéité et les extrémités des aubes rotoriques par refroidissement de l'anneau par un flux gazeux dont la température et le débit peuvent être modifiés. Ce flux gazeux est obtenu par le mélange d'air froid prélevé au compresseur et de gaz chauds prélevés dans le conduit de sortie de la chambre de combustion. L'air froid et les gaz chauds arrivent dans deux chambres séparées portant chacune sur leur paroi radiale une rangée circulaire d'ouvertures. Un disque, coopérant avec la paroi radiale, porte deux rangées d'ouvertures dont une au moins coopère avec une des rangées d'ouvertures prévue sur la paroi radiale. Le disque porte sur son bord intérieur un talon qui est disposé sur le passage des gaz de combustion traversant les aubages. Les variations de température des gaz de combustion produisent des variations dimensionnelles de l'anneau amenant les rangées d'ouvertures du disque en coïncidence complète ou partielle avec les rangées d'ouvertures des chambres et permettant un débit plus ou moins important de l'air froid et des gaz chauds dans une chambre de mélange alimentant le circuit de refroidissement de l'anneau.

Le brevet GB-A-1 484 288 concerne également un dispositif de contrôle des jeux d'un anneau d'étanchéité basé sur l'admission d'air provenant du compresseur haute pression dans deux chambres concentriques formées dans l'anneau d'étanchéité. L'anneau est maintenu par un support élastiqueà l'intérieur d'un élément concentrique de masse relativement importante qui forme, avec la paroi extérieure de l'anneau, une chambre alimentée également par l'air du compresseur haute pression au travers d'un passage annulaire susceptible d'être obturé lors de la dilatation différentielle de l'élément et de l'anneau.

Le dispositif, selon l'invention, est basé sur le même principe du contrôle de l'admission d'air de refroidissement par obturation plus ou moins complète des passages d'air par la dilatation d'un organe soumis aux variations de température du flux de gaz traversant les aubages de la turbine.

On connaît également par CH-A 311 370 un rotor de turbine à gaz muni d'un circuit de refroidissement dans lequel l'air de refroidissement passant à travers des canaux ménagés dans les fonds d'alvéoles de disques de rotor est acheminé d'un étage à l'autre par des perçages ménagés sur des disques-entretoises formant supports de joint, des chambres annulaires étant ménagées à l'interface entre un support de joint et un disque de rotor. En outre, les bords amont et aval de l'extrémité externe desdits supports de joint portent des collerettes d'appui.

L'invention est remarquable en ce que les porte-labyrinthes portent à leurs extrémités amont et aval, des moyens d'obturation annulaires susceptibles de venir obturer, sous l'action des dilatations différentielles radiales d'ordre mécanique et thermique des disques et des porte-labyrinthes, les passages dans les fonds des alvéoles prévus dans les disques, l'obturation des passages étant définie par les positions des moyens d'obturation et des passages, positions déterminées par le dimensionnement et les cœfficients de dilatation thermique respectifs des disques et des porte-labyrinthes.

Les explications et figures données ci-après à titre d'exemple permettront de comprendre comment l'invention peut être réalisée.

La figure 1 représente une vue schématique et en coupe axiale d'une partie d'une turbine basse pression comportant un dispositif conforme à l'invention dans la configuration correspondant à la phase d'accélération du moteur.

La figure 2 est une vue semblable à la figure 1, représentant la configuration du dispositif en régime stabilisé.

La figure 3 est une vue semblable à la figure 1 représentant la configuration du dispositif dans la phase "décélération".

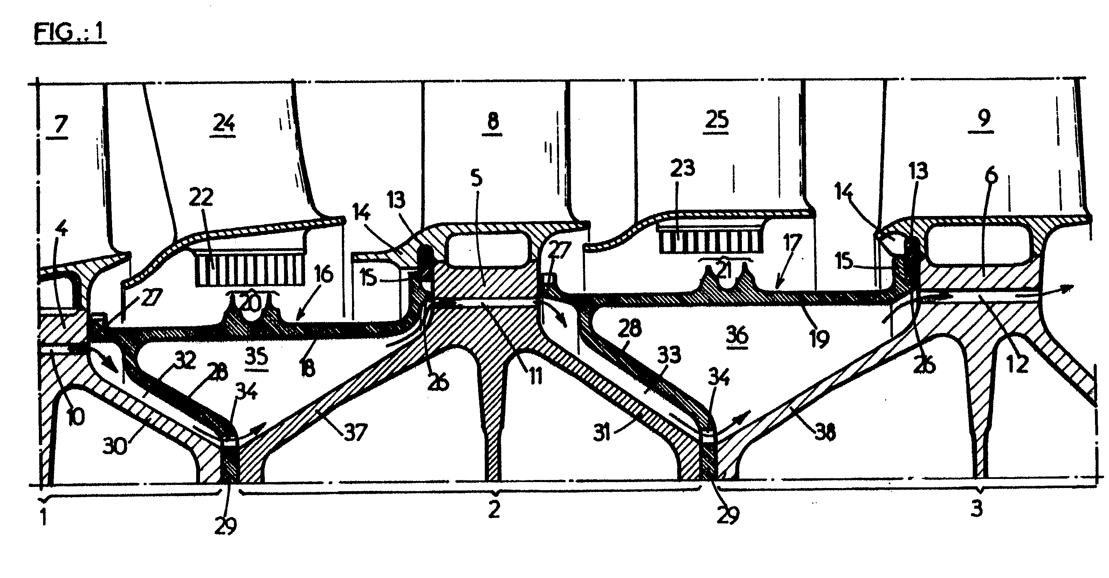

La figure 1 représente en coupe schématique axiale les trois premiers étages d'une turbine basse pression d'un moteur d'avion.

Les disques de turbine 1, 2, 3 portent sur leur jante, de manière connue, des alvéoles dans lesquels sont logés les pieds 4,5, 6 des aubes 7, 8, 9. Entre le fond des alvéoles et l'extrémité inférieure des pieds d'aube sont prévus des passages 10, 11, 12 dans lesquels circule de l'air de refroidissement provenant du compresseur.

Les pieds d'aube sont maintenus dans les alvéoles, de manière connue, par exemple en amont par des secteurs annulaires 13 coopérant avec une rainure dans la plateforme de l'aube 14 et, dans la réalisation représentée par une collerette périphérique 15 prévue à l'extrémité aval des porte-labyrinthes 16,17 disposés entre les disques 1, 2 et 2 et 3. Ces porte-labyrinthes ont une forme en épingle et sont constitués d'une partie cylindrique extérieure 18, 19 portant sur sa surface extérieure : à sa partie médiane les joints labyrinthes 20, 21 qui coopèrent avec les anneaux d'étanchéité 22,23 prévus à l'extrémité des aubages statoriques 24, 25 ; à son extrémité aval des moyens d'obturation annulaires constitués de collerettes périphériques 15 sur les faces extérieures desquelles sont prévus des talons annulaires 26 dirigés vers l'extérieur, et venant appuyer sur au moins la partie inférieure des pieds d'aube et des alvéoles dans lesquelles sont prévus les passages de refroidissement 11 et 12 et susceptibles d'obturer plus ou moins complètement lesdits passages comme il sera ultérieurement expliqué ; à son extrémité amont : des moyens d'obturation annulaires constitués d'une collerette d'appui 27 périphérique, venant appuyer sur au moins la partie inférieure des pieds d'aube pour bloquer leur déplacement axial et susceptibles d'obturer plus ou moins complètement les passages 11 et 12 comme il sera ultérieurement expliqué, et sur sa surface intérieure près de son extrémité amont une paroi support 28 tronconique dont l'extrémité libre est prolongée vers le centre par un anneau radial 29 fixé sur le rotor formé par les flasques tronconiques des disques 1, 2, 3.

La paroi support 28 laisse entre elle et les flasques 30, 3I des disques voisins 1 et 2 un espace 32, 33 qui débouche, par des ouvertures 34 prévues au voisinage de la jonction des parties annulaire et tronconique de la paroi support, dans une chambre 35, 36 formée par la paroi support 28 et la partie cylindrique 18, 19 du porte-labyrinthe et la paroi tronconique 37, 38 des disques 2 et 3.

Selon une forme de réalisation plus simple, non représentée, les moyens d'obturation aval et amont sont constitués de collerettes d'appui semblables.

Dans la configuration représentée à la figure 1, l'air de refroidissement prélevé au compresseur, entre librement dans le passage 10 de refroidissement des alvéoles du premier disque 1, sort par l'orifice défini entre la sortie du passage 10 et la collerette d'appui 27 du premier porte-labyrinthe 16, chemine dans l'espace 32 et la chambre 35 formés entre les premier et deuxième disque 1 et 2, entre par l'orifice défini entre le talon 26 du premier porte-labyrinthe 16 et l'entrée du passage 11 pour refroidir les alvéoles du deuxième disque 2, sort par l'orifice défini entre la sortie du passage 11 et la collerette d'appui 17 du deuxième porte-labyrinthe 17, chemine à nouveau dans l'espace 33 et la chambre 36 formés entre les deuxième et troisième disques 2 et 3, entre par l'orifice défini entre le talon 26 du deuxième porte-labyrinthe 17 et l'entrée du passage 12 pour refroidir les alvéoles du troisième disque 3 et s'échapper librement par exemple dans le flux de gaz traversant la turbine.

Cette configuration correspond au plein débit d'air de refroidissement qui s'établit dans la phase d'accélération pour laquelle le régime moteur est le plus élevé et les gradients thermiques les plus forts et qui permet d'avoir des températures de disques acceptables.

La modification rapide de la température de la veine de gaz traversant la turbine produit un échauffement des pièces en contact d'autant plus rapide que leur masse est plus faible. Comme les porte-labyrinthes ont nécessairement une masse plus faible que les disques, leur inertie thermique est faible et leur échauffement rapide engendrera leur dilatation au moins dans le sens radial avec pour résultat l'ouverture des passages 10, 11,12 à leur section maximale de débit prévue. Ces sections sont définies par les positions relatives des collerettes et des talons des porte-labyrinthes et des passages prévus dans les alvéoles des disques.

Les positions son déterminées par le dimensionnement ainsi que par les coefficients de dilatation thermique respectifs des disques et porte-labyrinthes de sorte que les dilatations différentielles d'ordre mécanique et thermique de ces éléments leur permettent de prendre des positions telles que l'air de refroidissement puisse :

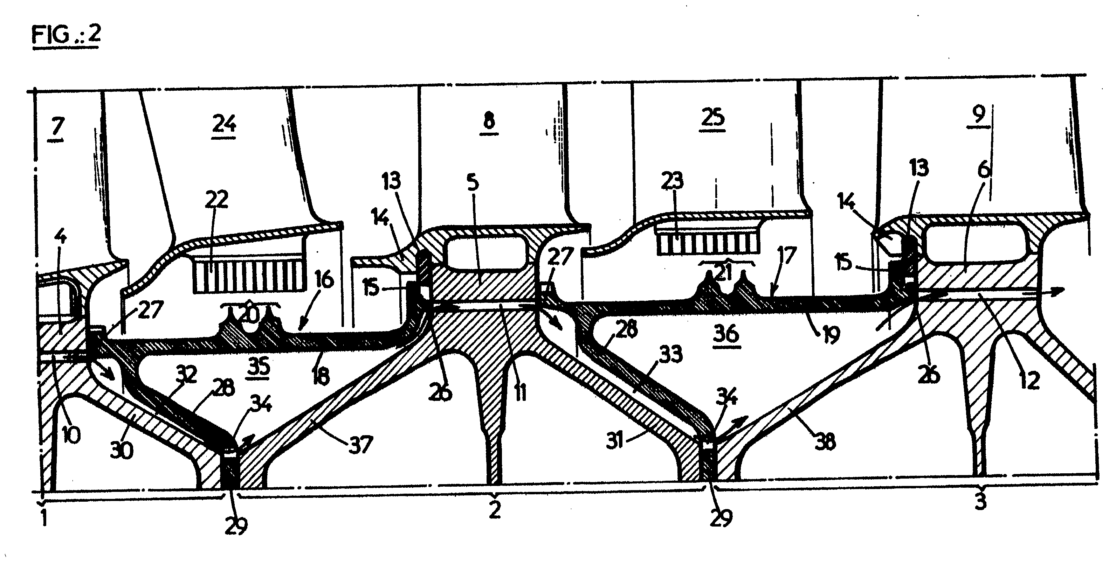

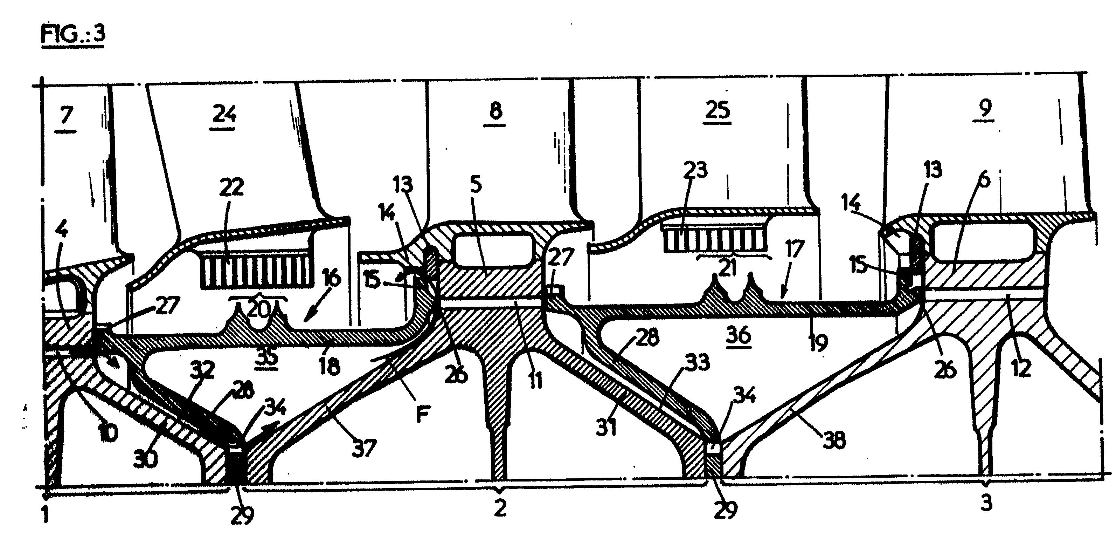

- traverser les alvéoles des trois disques au débit maximum, ou
- n'agir sur les trois disques qu'à débit réduit (figure 2), ou
- n'agir que sur le premier disque, l'entrée et/ou la sortie des alvéoles des disques suivants étant totalement fermée (figure 3).

La figure 2 est la configuration du dispositif de refroidissement en régime "stabilisé", la température de la veine de gaz est plus faible que celle en régime d'accélération. Il s'en suit que les disques ont besoin d'un refroidissement moins important nécessitant un moindre débit d'air de refroidissement.

Les températures étant plus faibles, la dilatation des porte-labyrinthes est moindre et les talons 26 et collerettes 27 qu'ils portent sont plus rapprochés de l'axe et ferment plus ou moins complètement les passages 10, 11, 12 en fonction de la température des gaz.

La figure 3 est la configuration du dispositif de refroidissement en phase de "décélération", comme dans le cas de l'accélération mais à l'inverse les porte-labyrinthes se refroidissent plus vite que les disques. Et, selon un exemple de réalisation, le porte-labyrinthe 17 est prévu de manière que sa collerette d'appui 27 et son talon 26 viennent fermer complètement, respectivement la sortie du passage 11 du deuxième disque 2 et l'entrée du passage 12 du troisième disque 3. La collerette d'appui 27 et le talon 26 du porte-labyrinthe 16 obturent plus ou moins complètement la sortie du passage 10 et l'entrée du passage 11. Il y a suppression du refroidissement des fonds d'alvéoles puisque même dans le premier passage 10, la circulation d'air sera fortement réduite par suite de l'obturation de la sortie du passage 11 du deuxième disque. Par conséquent, la température des fonds d'alvéoles des disques 1, 2, 3 baissera moins vite pendant la phase de "décélération". Cette situation est particulièrement favorable car elle permet d'éviter une inversion de gradient entre le centre du disque et le fond des alvéoles, inversion particulièrement nuisible à la durée de vie du disque. La chambre 35 continue cependant à être alimentée en air par le passage 10 et l'ouverture 34. La montée en surpression dans la chambre 35 est empêchée par un débit de fuite calibré entre les talons 26 de la collerette 15 et la face amont du disque 2, puis entre la partie extérieure de la collerette 15 et la partie intérieure des secteurs annulaires 13, comme représenté par la flèche F sur la figure 3. Ce débit de fuite favorise l'équilibre des pressions entre parois interne et externe du porte-labyrinthe 18, régulant ainsi le débit d'air de refroidissement au niveau du passage 10, car la montée en pression dans la chambre 35 va dans le sens d'un allongement du porte-labyrinthe 18, donc d'une plus grande ouverture du passage 10.

## Revendications

1. Dispositif de contrôle des débits d'air de refroidissement d'une turbine de moteur d'avion, l'air de refroidissement circulant dans des passages (10, 11, 12) ménagés dans les fonds d'alvéoles logeant les pieds (4, 5, 6) d'aube, prévus dans les disques (1, 2, 3) d'un rotor de turbine et les disques (1, 2, 3) étant séparés par des porte-labyrinthes (16, 17), dont les bords amont et aval d'extrémité externe portent une collerette périphérique (15) caractérisé en ce que, les porte-labyrinthes (16, 17) portent à leurs extrémités amont et aval, des moyens d'obturation (26, 27) annulaires susceptibles de venir obturer, sous l'action des dilatations différentielles radiales d'ordre mécanique et thermique des disques et des porte-labyrinthes, les passages (10, 11, 12) dans les fonds des alvéoles prévus dans les disques (1, 2, 3), l'obturation des passages étant définie par les positions des moyens d'obturation (26, 27) et des passages (10, 11, 12), positions déterminées par le dimensionnement et les coefficients de dilatation thermique respectifs des disques et des porte-labyrinthes.

2. Dispositif de contrôle selon la revendication 1, dans lequel les porte-labyrinthes ont une forme en épingle présentant une partie extérieure (18, 19) portant le joint labyrinthe (20, 21), à une extrémité de laquelle est prévue vers l'intérieure, une paroi support (28), tronconique, dont l'extrémité libre est prolongée vers le centre par un anneau radial (29) de fixation au rotor, caractérisé en ce que les moyens d'obturation annulaires (26, 27) sont constitués à au moins une extrémité du porte-labyrinthe (16, 17) d'une collerette d'appui (27) périphérique venant appuyer sur au moins la partie inférieure des pieds d'aube pour bloquer leur déplacement axial et pour obturer plus ou moins complètement les passages (10, 11) dans les disques (1, 2).

3. - Dispositif de contrôle selon la revendication 2, caractérisé en ce que les moyens d'obturation annulaires (26) sont constitués à l'extrémité aval du porte-labyrinthe (16,17) d'un talon annulaire (26) prévu sur la face extérieure d'une collerette périphérique (15), ledit talon venant appuyer sur au moins la partie inférieure des pieds d'aube et des alvéoles des disques (2,3) pour obturer plus ou moins complètement les passages (11,12).

4. - Dispositif de contrôle selon la revendication 2 ou 3, caractérisé en ce que la paroi support (28) des portelabyrinthes (16,17) forme entre deux disques voisins (1,2) un espace (32,33) à une extrémité duquel débouche le passage (10,11) de refroidissement des alvéoles du premier disque (1 ; 2) et dont l'autre extrémité communique par des ouvertures (34) avec chambre (35,36) communicant avec le passage (11,12) de refroidissement des alvéoles du deuxième disque (2 ; 3).

5. - Dispositif de contrôle selon la revendication 4, adapté aux trois premiers étages d'une turbine basse pression et dont l'air de refroidissement est prélevé au niveau du compresseur, caractérisé en ce que l'air de refroidissement entre librement dans le passage (10) de refroidissement des alvéoles du premier disque (1), sort par l'orifice défini entre la sortie du passage (10) et la collerette d'appui (27) du premier porte-labyrinthe (16), subit une première détente dans l'espace (32) et la chambre (35) formés entre les premier et deuxième disques (1 et 2), entre par l'orifice défini entre la talon (26) du premier porte-labyrinthe (16) et l'entrée du passage (11) pour refroidir les alvéoles du deuxième disque (2), sort par l'orifice défini entre la sortie du passage (11) et la collerette d'appui (27) du deuxième porte- labyrinthe (17), subit une deuxième détente dans l'espace (33) et la chambre (36) formés entre les deuxième et troisième disques (2 et 3), entre par l'orifice défini entre le talon (26) du deuxième porte-labyrinthe (17) et l'entrée du passage (12) pour refroidir les alvéoles du troisième disque (3) et s'échapper librement.

## Patentansprüche

1. Vorrichtung zum Steuern der Kühlluftdurchsatzmengen in einem Turboluftstrahltriebwerk, bei der die Kühlluft in Durchgängen (10, 11, 12) zirkuliert, die in den Böden von die Schaufelfüße (4, 5, 6) aufnehmenden Zellen angebracht sind, die in den Scheiben (1, 2, 3) eines Turbinenrotors vorgesehen sind, wobei diese Scheiben (1, 2, 3) durch Labyrinthträger (16, 17) voneinander getrennt sind, deren stromaufwärtigen und stromabwärtigen Ränder an den äußeren Endbereichen einen peripheren Kragen (5) tragen, dadurch gekennzeichnet, daß die Labyrinthträger (16, 17) an ihren stromaufwärtigen und stromabwärtigen Endbereichen ringförmigen Verschlußmittel (26, 27) aufweisen, die die in den Böden der an den Scheiben (1, 2) ausgebildeten Zellen vorgesehenen Durchgänge (10, 11, 12) unter der Einwirkung der differentiellen mechanischen und thermischen radialen Ausdehnungen der Scheiben und der Labyrinthträger (16, 17) verschließen können, wobei das Verschließen der Durchgänge (10, 11, 12) durch die Positionen der Verschlußmittel (26, 27) und der der Durchgänge (10, 11, 12) bestimmt wird und diese Positionen durch die Dimensionierung und die jeweiligen Wärmeausdehnungskoeffizienten der Scheiben und der Labyrinthträger festgelegt sind.

2. Steuervorrichtung nach Anspruch 1, bei der die Labyrinthträger klammerartig ausgebildet sind und ein die Labyrinthdichtung (20, 21) tragendes äußeres Teil (18, 19) besitzen, an dessen einem Endbereich eine nach innen weisende kegelstumpfförmige Trägerwand (28) vorgesehen ist, deren freier Endbereich sich die Richtung auf das Zentrum in einem radialen Ring (29) verlängert, der zur Befestigung an dem Rotor dient, dadurch gekennzeichnet, daß die ringförmigen Verschlußmittel (26, 27) an wenigstens einem Endbereich des Labyrinthträgers (16, 17) von einem peripheren Stützkragen (27) gebildet sind, der sich zumindest auf dem inneren Teil der Schaufelfüße abstützt, um diese gegen axiale Verschiebung zu blockieren und die Durchgänge (10, 11) in den Scheiben (1, 2) mehr oder weniger vollständig zu verschließen.

3. Steuervorrichtung nach Anspruch 2, dadurch gekennzeichnet, daß die ringförmigen Verschlußmittel (26) an dem stromaufwärtigen Endbereich des Labyrinthträgers (16, 17) von einem an der Außenseite eines peripheren Kragens (15) vorgesehenen ringförmigen Absatz (26) gebildet sind, der sich zumindest auf dem unteren Teil der Schaufelfüße und Zellen der Scheiben (2, 3) abstützt, um die Durchgänge (10, 11) mehr oder weniger vollständig zu verschließen.

4. Steuervorrichtung nach Anspruch 2 oder 3, dadurch gekennzeichnet, daß die Trägerwand (28) zur Halterung der Labyrinthträger (16, 17) zwischen zwei benachbarten Scheiben (1, 2) einen Zwischenraum (32, 33) bildet, in dessen einem Endbereich der Durchgang zum Kühlen der Zellen der ersten Scheibe (1; 2) mündet und dessen anderer Endbereich über Öffnungen (34) mit einer Kammer (35, 36) in Verbindung steht, die mit dem Durchgang (11, 12) zum Kühlen der Zellen der zweiten Scheibe (2; 3) verbunden ist.

5. Steuervorrichtung nach Anspruch 4, die an die drei ersten Stufen einer Niederdruckturbine angepaßt ist und deren Kühlluft in Höhe des Verdichters entnommen wird, dadurch gekennzeichnet, daß die Kühlluft
— frei in den Durchgang (10) zum Kühlen der Zellen der ersten Scheibe (1) eintritt,
— durch die zwischen dem Auslaß dieses Durchgangs (10) und dem Stützkragen (27) des ersten Labyrinthträgers (16) begrenzte Öffnung austritt,
— in dem Zwischenraum (32) und der Kammer (35), die zwischen der ersten und der zweiten Scheibe (1 und 2) ausgebildet sind, einer ersten Entspannung unterworfen wird,
— durch die zwischen dem Absatz (26) des ersten Labyrinthträgers (16) und dem Einlaß des Durchgangs (11) bestimmte Öffnung eintritt, um die zweite Scheibe (2) zu kühlen,
— durch die zwischen dem Auslaß des Durchgangs (11) und dem Stützkragen (27) des zweiten Labyrinthträgers (17) bestimmte Öffnung austritt,
— in dem Zwischenraum (33) und der Kammer (36), die zwischen der zweiten und der dritten Scheibe (2 und 3) gebildet sind, einer zweiten Entspannung unterworfen wird,
— durch die zwischen dem Absatz (26) des zweiten Labyrinthträgers (17) und dem Einlaß des Durchgangs (12) eintritt, um die dritte Scheibe (3) zu kühlen, und
— frei entweicht.

## Claims

1. Control device for the flux of cooling air for an aircraft engine turbine, the cooling air circulating in passages (10, 11, 12) provided in the cell bases housing the blade roots (4, 5, 6), provided in the discs (1, 2, 3) of a turbine rotor and the discs (1, 2, 3) being separated by labyrinth carriers (16, 17), whose upstream and downstream outer end edges carry a peripheral collar (15), characterized in that the labyrinth carriers (16, 17) carry at their upstream and downstream ends annular blocking means (26, 27) capable of blocking, under the action of differential radial expansions of a mechanical and thermal order of the discs and of the labyrinth carriers, the passages (10, 11, 12) in the bases of the cells provided in the discs (1, 2, 3), the blocking of the passages being defined by the positions of the blocking means (26, 27) and of the passages (10, 11, 12), which positions are determined by the respective dimensions and coefficients of thermal expansion of the discs and of the labyrinth carriers.

2. Control device according to Claim 1, in which the labyrinth carriers have a pin shape exhibiting an outer part (18, 19) carrying the labyrinth gland (20, 21), at one end of which there is provided, towards the inside, a frustoconical support wall (28) whose free end is extended towards the centre by a radial ring (29), for fastening to the rotor, characterized in that the annular blocking means (26, 27) consist, at least one end of the labyrinth carrier (16, 17), of a peripheral support collar (27) bearing on at least the lower part of the blade roots in order to block their axial displacement and to block more or less completely the passages (10, 11) in the discs (1, 2).

3. Control device according to Claim 2, characterized in that the annular blocking means (26) consist, at the downstream end of the labyrinth carrier (16, 17), of an annular projection (26) provided on the outer face of a peripheral collar (15), the said projection bearing on at least the lower part of the blade roots and the cells of the discs (2, 3) in order to block more or less completely the passages (11, 12).

4. Control device according to Claim 2 or 3, characterized in that the support wall (28) of the labyrinth carriers (16, 17) forms, between two adjacent discs (1, 2), a space (32, 33) at one end of which debouches the passage (10, 11) for cooling the cells of the first disc (1; 2) and whose other end communicates, via openings (34), with a chamber (35, 36) communicating with the passage (11, 12) for cooling the cells of the second disc (2; 3).

5. Control device according to Claim 4, adapted to the first three stages of a low-pressure turbine and whose cooling air is taken off at the level of the compressor, characterized in that the cooling air enters freely into the passage (10) for cooling the cells of the first disc (1), exits via the orifice defined between the outlet of the passage (10) and the support collar (27) of the first labyrinth carrier (16), undergoes a first decrease in pressure in the space (32) and the chamber (35) formed between the first and second discs (1 and 2), enters via the orifice defined between the projection (26) of the first labyrinth carrier (16) and the inlet of the passage (11) in order to cool the cells of the second disc (2), exits via the orifice defined between the outlet of the passage (11) and the support collar (27) of the second labyrinth carrier (17), undergoes a second decrease in pressure in the space (33) and the chamber (36) formed between the second and third discs (2 and 3), enters via the orifice defined between the projection (26) of the second labyrinth carrier (17) and the inlet of the passage (12) in order to cool the cells of the third disc (3) and to escape freely.

FIG.: 1

EP 0 250 323 B1

FIG.:2

FIG.:3